# EUROPEAN PATENT APPLICATION

(11) **EP 4 756 609 A1**
(43) Date of publication of application: **10.06.2026**
(21) Application number: 25221107.3
(22) Date of filing: 05.12.2025
(51) Int. Cl.: G06F 9/451, G06F 9/54, G06F 16/957

(54) **CAPABILITY NEGOTIATION FOR DYNAMIC USER INTERFACE TILES**

(30) Priority: 05.12.2024 US 202463728487 P; 05.12.2024 US 202463728476 P; 05.12.2024 US 202463728494 P; 02.12.2025 US 202519406105
(71) Applicant: Capital One Services, LLC, McLean, Virginia 22102 (US)
(72) Inventor: DELIA, Christopher, McLean, VA 22102 (US); SHARMA, Amit, McLean, VA 22102 (US); KHAN, Naveed, McLean, VA 22102 (US); SIVANESAN, Gopinath, McLean, VA 22102 (US); MUTO, Mark, McLean, VA 22102 (US); BARTHOLOW, Eric, McLean, VA 22102 (US); MOORE, Stuart James, McLean, VA 22102 (US); GADDE, Sandeep, McLean, VA 22102 (US); LOPEZ VARGAS, Victor Raul, McLean, VA 22102 (US); SHULL, Daniel, McLean, VA 22102 (US); SELVARAJAN, Inbarajan, McLean, VA 22102 (US); RAWLS, Cara Jo, McLean, VA 22102 (US); NATEKAR, Devendra, McLean, VA 22102 (US)
(74) Representative: Boult Wade Tennant LLP

(57) **Abstract**

In some implementations, a system may receive, from a client device, a request for a dynamic user experience associated with a user interface. The system may receive, from the client device and in association with receiving the request for the dynamic user experience, capability information indicating one or more client capabilities supported by the client device for the dynamic user interface tiles. The system may transmit, to the client device, a tile specification indicating user interface information for a user interface tile associated with the dynamic user experience, where the tile specification is in accordance with the capability information and one or more provider capabilities.

## Description

### CROSS-REFERENCE TO RELATED APPLICATIONS

This Patent Application claims priority to U.S. Provisional Patent Application No. 63/728,487, filed on December 5, 2024, and entitled "CAPABILITY NEGOTIATION FOR DYNAMIC USER INTERFACE TILES," to U.S. Provisional Patent Application No. 63/728,476, filed on December 5, 2024, and entitled "EXPERIENCE CONFIGURATION FOR DYNAMIC USER INTERFACE TILES," and to U.S. Provisional Patent Application No. 63/728,494, filed on December 5, 2024, and entitled "RESOLVING AND HYDRATING DYNAMIC TILE SPECIFICATIONS." The disclosures of the prior Applications are considered part of and are incorporated by reference into this Patent Application.

### BACKGROUND

A graphical user interface is a form of user interface that allows users to interact with electronic devices. A web browser or application executing on a client device may provide a graphical user interface that presents one or more pages. A user may navigate to a page by entering a web address into an address bar of the web browser and/or by clicking a link displayed via another page. Navigation to a page may consume resources of a client device on which the web browser is installed or the application is executing, may consume resources of a server that serves the page to the client device, and/or may consume network resources used for communications between the client device and the server.

### SUMMARY

Some implementations described herein relate to a system for a capability negotiation for dynamic user interface tiles. The system may include one or more memories and one or more processors communicatively coupled to the one or more memories. The one or more processors may be configured to receive, from a client device, a request for a dynamic user experience associated with a user interface. The one or more processors may be configured to receive, from the client device and in association with receiving the request for the dynamic user experience, capability information indicating one or more client capabilities supported by the client device for the dynamic user interface tiles. The one or more processors may be configured to transmit, to the client device, a tile specification indicating user interface information for a user interface tile associated with the dynamic user experience, wherein the tile specification is in accordance with the capability information and one or more provider capabilities.

Some implementations described herein relate to a method for a capability negotiation for dynamic user interface tiles. The method may include transmitting, by a client device and to a server device, a request for a dynamic user experience associated with a user interface. The method may include transmitting, by the client device and to the server device, capability information indicating one or more client capabilities supported by the client device for dynamic user interface tiles. The method may include receiving, by the client device and from the server device, a tile specification indicating user interface information for a user interface tile associated with the dynamic user experience, wherein the tile specification is in accordance with the capability information and one or more provider capabilities of the server device. The method may include rendering, by the client device, one or more user interface elements associated with the user interface tile based on the tile specification. The method may include providing, by the client device, the one or more user interface elements for display via the user interface.

Some implementations described herein relate to a non-transitory computer-readable medium that stores a set of instructions. The set of instructions, when executed by one or more processors of a server device, may cause the server device to receive, from a client device, a request for a dynamic user experience associated with a user interface. The set of instructions, when executed by one or more processors of the server device, may cause the server device to receive, from the client device and in association with receiving the request for the dynamic user experience, capability information indicating one or more client capabilities supported by the client device for dynamic user interface tiles. The set of instructions, when executed by one or more processors of the server device, may cause the server device to transmit, to the client device, a tile specification indicating user interface information for a user interface tile associated with the dynamic user experience, wherein the tile specification is in accordance with the capability information and one or more provider capabilities.

According to a first aspect of the invention, there is provided a system for a capability negotiation for dynamic user interface tiles, the system comprising: one or more memories; and one or more processors, communicatively coupled to the one or more memories, configured to: receive, from a client device, a request for a dynamic user experience associated with a user interface; receive, from the client device and in association with receiving the request for the dynamic user experience, capability information indicating one or more client capabilities supported by the client device for the dynamic user interface tiles; and transmit, to the client device, a tile specification indicating user interface information for a user interface tile associated with the dynamic user experience, wherein the tile specification is in accordance with the capability information and one or more provider capabilities.

In some embodiments of the first aspect, the one or more client capabilities include at least one of: an identifier of an application that is configured to display the user interface via the client device, a version of the application, a channel associated with the application, one or more user interface actions supported by the application, one or more supported tile elements associated with the tile specification, or one or more supported tile types.

In some embodiments of the first aspect, the one or more processors are further configured to: generate, based on receiving the request for the dynamic user experience, the tile specification in accordance with the one or more client capabilities and the one or more provider capabilities.

In some embodiments of the first aspect, the capability information includes a hash value that is based on the one or more client capabilities.

In some embodiments of the first aspect, the one or more processors are further configured to: generate a hash value based on the one or more client capabilities; and store the one or more client capabilities in association with the hash value.

In some embodiments of the first aspect, the one or more processors, to receive the capability information, are configured to: receive, from the client device, a hash value that is based on the one or more client capabilities; determine that the one or more client capabilities are not accessible using the hash value; transmit, to the client device, an indication that the one or more client capabilities are not accessible using the hash value; and receive, from the client device, a capability document that includes the one or more client capabilities based on transmitting the indication that the one or more client capabilities are not accessible using the hash value.

In some embodiments of the first aspect, the dynamic user experience is associated with multiple variants of the dynamic user experience, wherein the dynamic user experience is associated with one or more segmentation parameters indicating deployment segmentations for the multiple variants, and wherein the tile specification indicates a variant, of the multiple variants, in accordance with the one or more segmentation parameters.

In some embodiments of the first aspect, the capability information indicates one or more user permissions granted for the client device, and wherein the tile specification is in accordance with the one or more user permissions.

According to a second aspect of the invention, there is provided a method for a capability negotiation for dynamic user interface tiles, comprising: transmitting, by a client device and to a server device, a request for a dynamic user experience associated with a user interface; transmitting, by the client device and to the server device, capability information indicating one or more client capabilities supported by the client device for dynamic user interface tiles; receiving, by the client device and from the server device, a tile specification indicating user interface information for a user interface tile associated with the dynamic user experience, wherein the tile specification is in accordance with the capability information and one or more provider capabilities of the server device; rendering, by the client device, one or more user interface elements associated with the user interface tile based on the tile specification; and providing, by the client device, the one or more user interface elements for display via the user interface.

In some embodiments of the second aspect, the method further comprises: detecting, based on a user interaction associated with the user interface, that the dynamic user experience is to be provided via the user interface, wherein transmitting the request for the dynamic user experience is based on detecting that the dynamic user experience is to be provided via the user interface.

In some embodiments of the second aspect, the one or more client capabilities include one or more capabilities of: an identifier of an application that is configured to display the user interface via the client device, a version of the application, a channel associated with the application, one or more user interface actions supported by the application, one or more supported tile elements associated with the tile specification, or one or more supported tile types.

In some embodiments of the second aspect, the capability information includes a hash value that is based on the one or more client capabilities.

In some embodiments of the second aspect, transmitting the capability information comprises: transmitting, to the server device, a hash value that is based on the one or more client capabilities; receiving, from the server device, an indication that the one or more client capabilities are not accessible by the server device using the hash value; and transmitting, to the server device, a capability document that includes the one or more client capabilities based on receiving the indication that the one or more client capabilities are not accessible by the server device using the hash value.

In some embodiments of the second aspect, the dynamic user experience is associated with multiple variants of the dynamic user experience, wherein the dynamic user experience is associated with one or more segmentation parameters indicating deployment segmentations for the multiple variants, and wherein the tile specification indicates a variant, of the multiple variants, in accordance with the one or more segmentation parameters. In such embodiments, the capability information indicates the one or more segmentation parameters.

In some embodiments of the second aspect, the method further comprises: obtaining one or more user permissions granted for the user interface, wherein the capability information indicates the one or more user permissions, and wherein the tile specification is in accordance with the one or more user permissions.

According to a third aspect of the invention, there is provided a non-transitory computer-readable medium storing a set of instructions, the set of instructions comprising: one or more instructions that, when executed by one or more processors of a server device, cause the server device to: receive, from a client device, a request for a dynamic user experience associated with a user interface; receive, from the client device and in association with receiving the request for the dynamic user experience, capability information indicating one or more client capabilities supported by the client device for dynamic user interface tiles; and transmit, to the client device, a tile specification indicating user interface information for a user interface tile associated with the dynamic user experience, wherein the tile specification is in accordance with the capability information and one or more provider capabilities.

In some embodiments of the third aspect, the capability information includes a hash value that is based on the one or more client capabilities.

In some embodiments of the third aspect, the dynamic user experience is associated with multiple variants of the dynamic user experience, wherein the dynamic user experience is associated with one or more segmentation parameters indicating deployment segmentations for the multiple variants, and wherein the tile specification indicates a variant, of the multiple variants, in accordance with the one or more segmentation parameters. In some such embodiments, the one or more instructions are further configured to cause the server device to: obtain user engagement information associated with the variant; and update, based on the user engagement information, the one or more segmentation parameters.

### BRIEF DESCRIPTION OF THE DRAWINGS

Figs. 1A-1C are diagrams of an example associated with a capability negotiation for dynamic user interface tiles, in accordance with some embodiments of the present disclosure.
Fig. 2 is a diagram of an example associated with a tile specification for dynamic user interface tiles, in accordance with some embodiments of the present disclosure.
Fig. 3 is a diagram of an example associated with a tile provider system for dynamic user interface tiles, in accordance with some embodiments of the present disclosure.
Fig. 4 is a diagram of an example environment in which systems and/or methods described herein may be implemented, in accordance with some embodiments of the present disclosure.
Fig. 5 is a diagram of example components of a device associated with a capability negotiation for dynamic user interface tiles, in accordance with some embodiments of the present disclosure.
Fig. 6 is a flowchart of an example process associated with a capability negotiation for dynamic user interface tiles, in accordance with some embodiments of the present disclosure.
Fig. 7 is a flowchart of an example process associated with a capability negotiation for dynamic user interface tiles, in accordance with some embodiments of the present disclosure.

### DETAILED DESCRIPTION

The following detailed description of example implementations refers to the accompanying drawings. The same reference numbers in different drawings may identify the same or similar elements.

A user interface of a client device may include a page for presentation via the client device. The user interface may include one or more graphical elements (e.g., for a graphical user interface (GUI)) that are configured to enable a user to interact with the client device (e.g., rather than using text-based commands or other commands). The graphical element(s) may include icons, visual indicators, buttons, menus, windows, text, interactive components, links, and/or visual elements, among other examples. The graphical elements may enable different user experiences to be provided for display to the user via the GUI. As used herein, a "user experience" refers to a manner and/or design in which information is presented to a user via one or more graphical elements of a GUI. A user experience may include a design (e.g., a size, a shape, and/or content being displayed) and/or layout of one or more graphical elements. A user experience may be evaluated based on one or more factors, such as usability, accessibility, visual design, responsiveness, and/or ease of navigation, among other examples. For example, a user experience may be designed to be make the GUI intuitive, efficient, and/or enjoyable for a user to accomplish a goal. Therefore, improved user experiences for a GUI may reduce the amount of navigation performed by the user via the client device to accomplish the goal, thereby conserving processing resources, network resources, and/or power resources, among other examples, that would have otherwise been associated with additional navigation via the client device. Further, improved user experiences for a GUI may make data easier to access by enhancing the GUI, thereby enhancing user-friendliness of the client device and the GUI, and improving the ability of the user to use the client device, among other examples.

In some cases, a user experience may be changed or redesigned over time (e.g., to improve the performance and/or effectiveness of the user experience). However, the user experience may be provided via multiple channels that use respective interfaces (e.g., GUIs or other interfaces) to provide the user experience for display (e.g., where each channel is configured for a specific platform while maintaining the design and interactions of the user experience). For example, the multiple channels may include one or more applications (e.g., a web applicable or a mobile application), a web page, and/or a program (e.g., executing on the client device), among other examples. Additionally, a given channel may be associated with multiple variations or types. For example, a mobile application may be deployed via multiple operating systems that have different design conventions, use different formats, have application programming interface (API) details, and/or support different hardware, among other examples.

Therefore, it may be difficult to maintain consistency when updating or changing a user experience across multiple channels because of the channel-specific (or operating system-specific) differences. For example, it may be difficult to maintain a uniform design and functionality across various platforms (e.g., web, mobile, and/or desktop) that may have different user interface guidelines, technical limitations, and/or performance characteristics. Additionally, when deploying updates for mobile applications, the process may be more complex due to the different requirements of different operating systems. Further, an application may be associated with different versions. Different users may be using different versions of the application, introducing additional complexity associated with deploying the updated user experience across different versions of the same application (e.g., where the different versions may support different features). Additionally, ensuring synchronization of features, performance, and/or updates across all channels without introducing inconsistencies or bugs can be a time-consuming and resource-intensive process. As a result, updating a user experience may consume significant processing resources and/or time associated with designing, configuring, deploying, and/or testing the user experience separately for each channel (and/or for each operating system for a given channel).

In some examples, an update to a user experience may be deployed by deploying updated code for the GUI, such as by updating hypertext markup language (HTML) code. This may include updating the HTML structure for a GUI, such as a layout, content, and/or markup, among other examples. However, in such examples, the updated code may be deployed at a server device and provided to a client device when the client device requests a given user experience. As a result, the user experience (e.g., configured or deployed using the updated code) may not have the same look and feel as the rest of the GUI because the updated code may not use native components of the client device.

Therefore, in some implementations described herein, a system may provide user experiences in an omni-channel manner using a specification (e.g., referred to herein as a "tile specification" or a "dynamic tile definition"). The tile specification may define user interface component using a specification language (e.g., a dynamic tile language in JavaScript object notation (JSON)). The system (e.g., one or more server devices) may transmit, and a client device may receive, the tile specification. The client device may render a tile based on the tile specification and using one or more native components to display a tile via a GUI. As used herein, "tile" or "user interface tile" refers to a graphical element that represents an application, function, and/or piece of content, among other examples, within a digital interface, such as a GUI. A tile may be "dynamic" in that the design of the tile, the content presented or displayed via the tile, a function of the tile, and/or a link presented or displayed via the tile, among other examples may vary over time (e.g., depending on a user experience requested, attributes of the user and/or client device, and/or other factors).

By the system using the tile specification to define the manner in which a user experience is to be displayed via a user interface, the system can dynamically update the user experience by changing information in the tile specification. This enables the system to quickly and easily deploy updates for the user experience because a client device may be configured to obtain the tile specification, extract information from the tile specification, and render the tile using native components to generate the tile for the GUI to be displayed by the client device. This ensures that the tile will be generated in accordance with requirements and/or formats of a given channel because the tile is rendered at the client device (e.g., and is not deployed and/or configured using more complex updates and/or schemes).

However, different client devices may have different capabilities, may support different features, may have different versions of an application installed, and/or may be configured to display different versions of a user experience, among other examples. The system (e.g., that provides the tile specifications for dynamic user interface tiles) may not have access to information indicating what capabilities, features, and/or versions, are supported by a given client device. As a result, the system may transmit, and the client device may receive, a tile specification that is configured to cause the client device to render a user interface tile in a manner that is not supported (or not intended) by the client device. This may result in rendering errors, may consume resources (e.g., processing resources, network resources, and/or memory resources) associated with communicating the tile specification and attempting to render the user interface tile, and/or degrade the user experience, among other examples.

Some implementations described herein relate to a capability negotiation for dynamic user interface tiles. In some implementations, a client device may transmit, and a system may receive, capability information indicating one or more client capabilities supported by the client device for the dynamic user interface tiles. The system may generate a tile specification for a user experience based on, or in accordance with, the capability information. For example, the system may generate the tile specification such that the tile specification includes code that causes the client device to render a user interface tile in a manner that is supported by the client device. The system may transmit, and the client device may receive, the tile specification. The client device may render one or more user interface elements associated with the user interface tile based on the tile specification. The client device may provide the one or more user interface elements for display via a user interface. Although some examples are described herein using a tile as an example, it should be understood that the techniques and implementations described herein are applicable to any graphical element of a user interface.

In some implementations, the capability information may indicate one or more capabilities for respective parameters of a tile specification that defines a user experience. For example, the parameters may include an interface action parameter (e.g., an action type parameter), a tile element parameter, and/or a tile type parameter, among other examples. Additionally, or alternatively, the capability information may indicate an identifier of an application that is configured to display the user interface via the client device (e.g., a client name), a version of the application that is configured to display the user interface (e.g., a client version), and/or a channel associated with the application (e.g., a channel category), among other examples.

In some implementations, the client device may transmit, and the system may receive, a hash value that is based on the one or more client capabilities. The system may determine whether the capability information is accessible using the hash value. For example, if the system previously received capability information from the client device, then the system may store a hash value that is based on the one or more client capabilities and the hash value. The system may use the hash value to identify and/or obtain the capability information (e.g., that was previously received and/or stored by the system). If the system determines that the capability information is not accessible using the hash value, then the system may transmit, and the client device may receive, an indication (e.g., an error indication) that the capability information is not accessible by the system. In some implementations, the indication may be included in a request for full capability information. The client device may transmit, and the system may receive, the capability information (e.g., a capability document that includes the capability information) based on the indication that the capability information is not accessible by the system.

As a result, the system may obtain the capability information of the client device, thereby enabling the system to provide one or more tile specifications that cause the client device to render one or more user interface tiles in a manner that is supported by, or intended by, the client device. For example, the system may generate a tile specification that includes one or more parameters that are supported by the client device as indicated by the capability information. This improves the likelihood that the client device will be able to successfully render and display one or more user interface tiles based on the tile specification. As a result, the system and/or the client device may reduce rendering errors, may conserve resources (e.g., processing resources, network resources, and/or memory resources) that would have otherwise been associated with communicating a tile specification and attempting to render a user interface tile that indicates information and/or parameters not supported by the client device, and/or improve the user experience by enabling the user of tile specifications for rendering dynamic user interface tiles as described herein, among other examples.

Additionally, by the client device indicating a hash value that is based on the capability information, a size associated with signaling the capability information may be reduced. For example, because client device capability information may change over time, the system and the client device may be configured to communicate the capability information each time a dynamic user experience is requested by the client device. By the client device indicating the hash value, the system may be enabled to reuse previously indicated capability information when the client device capability information does not change between requests. Because the hash value may have a smaller size than the full capability information, the size of the capability signaling for dynamic user experiences may be reduced, thereby conserving network resources associated with communicating the capability information.

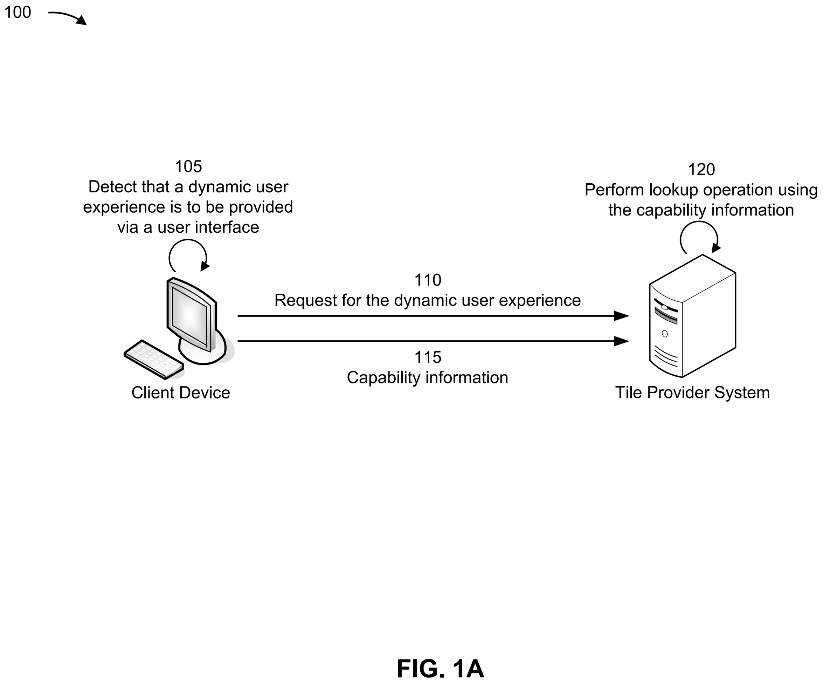

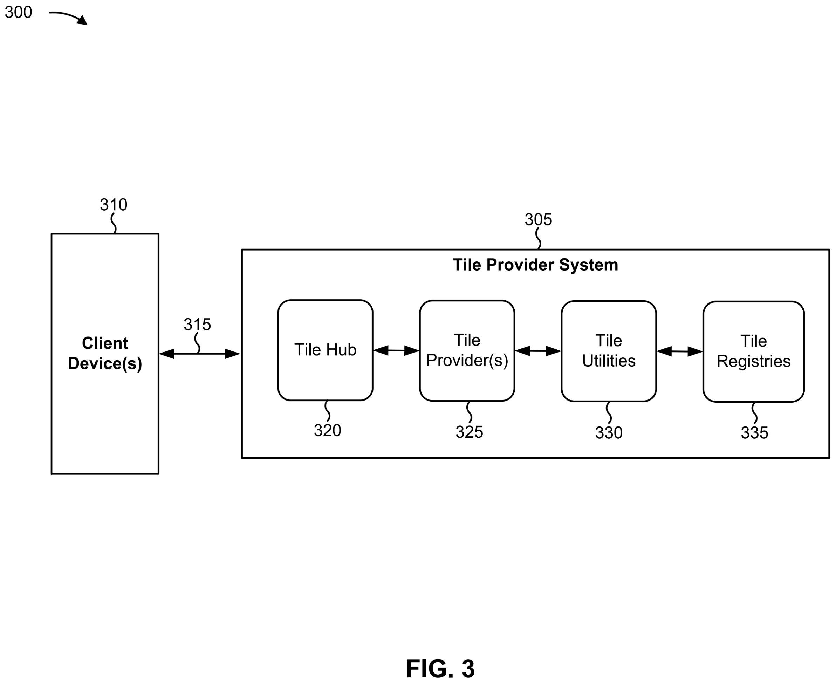

Figs. 1A-1C are diagrams of an example 100 associated with a capability negotiation for dynamic user interface tiles. As shown in Figs. 1A-1C, example 100 includes a client device and a tile provider system. These devices are described in more detail in connection with Figs. 3-5.

As shown in Fig. 1A, and by reference number 105, the client device may detect that a dynamic user experience is to be provided (e.g., displayed) via a user interface (e.g., a GUI). For example, the client device may detect that a user has navigated to a page, and/or interacted with a graphical element of the user interface, among other examples, that is configured to cause the client device to provide the dynamic user interface. Additionally, or alternatively, the client device may detect or determine that the user interface has been opened via the client device.

As shown by reference number 110, the client device may transmit, and the tile provider system may receive, a request for the dynamic user experience associated with the user interface. For example, the client device may determine the dynamic user experience based on user interaction with the user interface. The client device may determine the dynamic user experience based on the user interface, the page, and/or other information to be displayed via the user interface. The request for the dynamic user experience may include an identifier of the dynamic user experience.

Additionally, the request for the dynamic user experience may include client data associated with the client device. The client data may include an identifier of the client device, and/or an account identifier of an account of a user (e.g., an account that is logged in via the user interface), a user identifier of the user (e.g., a name, an address, and/or other information associated with the user), among other examples.

As shown by reference number 115, the client device may transmit, and the tile provider system may receive, capability information. The capability information may indicate one or more client capabilities supported by the client device for dynamic user interface tiles (e.g., for the dynamic user experience and/or for other dynamic user experiences). In some examples, the client device may transmit, and the tile provider system may receive, the capability information in association with the request for the dynamic user experience. For example, the capability information may be included in the request for the dynamic user experience (e.g., in the same message or transmission). As another example, the client device may transmit the capability information based on (e.g., after) transmitting the request for the dynamic user experience (e.g., in a separate message or transmission).

The capability information may be indicated via a data structure or a data object. The capability information may be included in a data object that includes one or more key-value pairs and/or an ordered list (or array) of values that indicate respective client capabilities of the client device. In some implementations, the capability information may be indicated using code, such as JSON code. For example, the capability information may be included in a JSON object, a JSON payload, and/or a JSON document.

The capability information may include one or more client capabilities associated with dynamic user interface tiles. In some implementations, the capability information may include device information. The device information may include an identifier of an application that is configured to display the user interface via the client device, a version of the application, and/or a channel associated with the application, among other examples. The identifier of the application (e.g., a client name) may be an identifier of the application that is configured to display the user interface tiles. By the client device including the channel (e.g., a channel category) in the capability information, the tile provider system may identify channel-specific information to be included in a tile specification, as described in more detail elsewhere herein. For example, for a web-based channel, a label of an interactive user interface element may be "click here" (e.g., because a mouse may be used as an input component for the web-based channel), whereas the label for the same interactive user interface element for a mobile-based channel may be "touch here" or "tap here" (e.g., because a mobile-based channel may be associated with a touch screen as a display screen for the user interface).

The device information may reduce the likelihood of two client devices producing the same capability signature. For example, the device information may reduce the likelihood of two different applications and/or two different versions of an application resulting in the same capability signature when the two different applications and/or two different versions otherwise have the same capability information. For example, by the client device including the identifier of the application in the capability information, the likelihood of two different applications that otherwise have the same capability information resulting in the same capability signature may be reduced (e.g., thereby reducing the likelihood of the tile provider system incorrectly identifying the application associated with a request for a dynamic user experience). As another example, by the client device including the version of the application in the capability information, the likelihood of two different versions of the application that otherwise have the same capability information resulting in the same capability signature may be reduced (e.g., thereby reducing the likelihood of the tile provider system incorrectly identifying the version of an application associated with a request for a dynamic user experience).

In some implementations, the capability information may include an indication of a tile specification schema supported by the client device. For example, the client device may be configured to interpret and/or decode tile specifications, as described elsewhere herein. The capability information may indicate a version of the schema or format of the tile specifications that the client device is capable of interpreting and/or decoding. This enables the tile provider system to generate the tile specification(s) for the client device using the schema and/or format supported by the client device.

The capability information may include tile capability information. The tile capability information may include one or more client capabilities associated with content and/or actions to be associated with user interface tiles, as described herein. For example, the capability information may include one or more user interface actions supported by the application. The one or more user interface actions may be action types supported by the application and/or the client device. A user interface action may be an action that the client device (and/or application) is configured to perform based on a user interaction with a user interface element displayed via a user interface tile. The one or more user interface actions may correspond to action types that can be indicated by a tile specification generated by the tile provider system. In some implementations, the capability information may include one or more image schema supported by the application and/or the client device. For example, an image schema may include a format for indicating a source of an image to be included in a user interface tile, such as a uniform resource locator (URL) format (e.g., a hypertext transfer protocol secure (HTTPS) format), a local data source format, and/or another format.

In some implementations, the capability information may include one or more user interface events supported by the application and/or the client device. A user interface event may be associated with a user interface action that is to be performed locally on the client device. In some implementations, the capability information may include one or more markup types supported by the application and/or client device. The one or more markup types may include an action type, a bold type, an italics type, a list item type, and/or a phone type, among other examples.

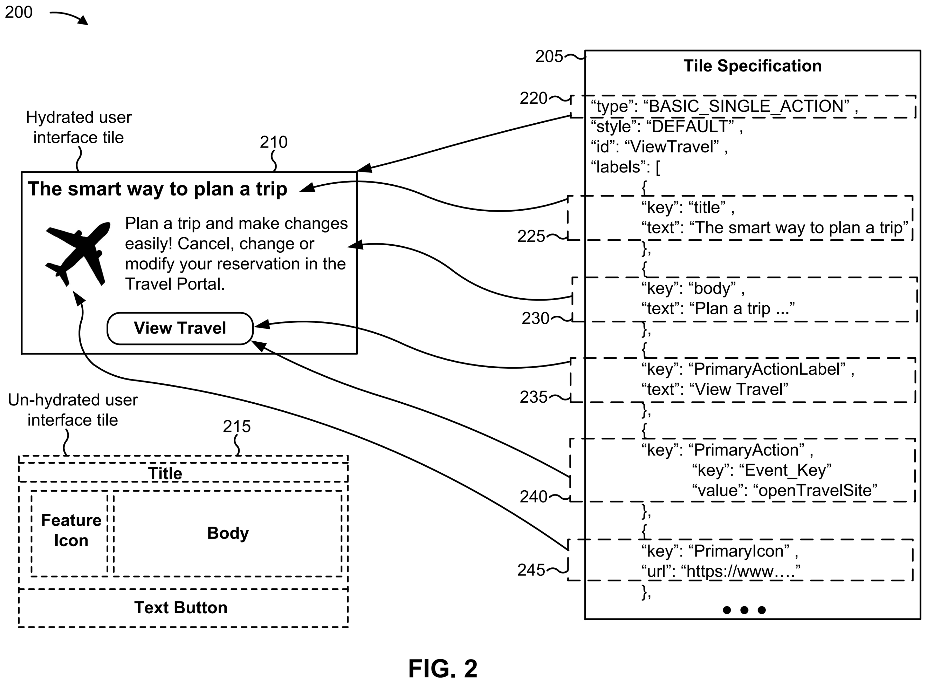

The capability information may include one or more supported tile elements associated with a tile specifications. A tile element may be a visual and/or graphical element included in a user interface tile. For example, the capability information may indicate one or more types of user interface elements (e.g., tile elements) that the application and/or client device can render. In some implementations, the capability information may include one or more supported tile types. A tile type may be a type included in a tile specification, as depicted and described in more detail in connection with Fig. 2. For example, a tile type may indicate a format, design, and/or layout of a user interface tile, such as via a user interface tile template depicted and described in more detail in connection with Fig. 2. The capability information may indicate which tile types are supported by the application and/or client device.

In some implementations, the capability information may include one or more user permissions granted for the client device and/or the application. For example, the client device may obtain one or more user permissions granted for the user interface displayed via the client device. The one or more user permissions may indicate the type and/or category of information that the user permits the client device to obtain and/or display via the user interface. The one or more user permissions may reduce the likelihood of the tile provider requesting and/or obtaining data for which the user has not granted permission to be shared. This may improve the security of user data (e.g., as the tile provider may only request and/or obtain data for which the user has granted permission).

In some implementations, the capability information may include one or more segmentation parameters indicating deployment segmentations for the multiple variants of the dynamic user experience. For example, the dynamic user experience may be associated with multiple variants. Each variant may vary the design, layout, text, image(s), and/or information provided for display via a user interface tile. In some implementations, each variant may be associated with accomplishing the same task, goal, and/or action (e.g., but with varied approaches). This may be useful for experimentation and/or for more tailored user experiences for different segments of the population. The one or more segmentation parameters may indicate percentages and/or portions of users that are to receive respective variants of the dynamic user experience.

In some implementations, the capability information may include a capability signature. The capability signature may be unique to the capability information. The capability signature may be a hash value that is based on the capability information (e.g., based on the one or more client capabilities). For example, the client device may perform a hashing process using a hash function to generate the capability signature. As an example, the client device may input the capability information to the hash function. The client device may obtain the capability signature as an output of the hash function. The hash function may include a cryptographic function, such as a secure hash algorithm (SHA) hash function, among other examples. The hash function may be configured such that any change in input data (e.g., any change in the capability information) will result in a different hash value being output by the hash function. As a result, the capability signature may be a unique identifier of the capability information.

In examples where the client device indicates the capability signature, the client device may refrain from transmitting full capability information, such as the data object that includes the capability information. As described in more detail elsewhere herein, this may enable the tile provider system to perform a lookup operation to identify the capability information (e.g., if the client device has previously provided the capability information to the tile provider system). This reduces duplicative signaling and reduces a size of the capability information, thereby conserving network resources associated with the client device requesting a dynamic user experience (e.g., because the capability information may otherwise be signaled each time that the client device requests a dynamic user experience from the tile provider system).

For example, as shown by reference number 120, the tile provider system may perform a lookup operation using the capability information. For example, the tile provider system may use an identifier of the application and/or the client device to perform the lookup operation. As another example, the tile provider system may use the capability signature (e.g., if provided) to perform the lookup operation. For example, the tile provider system may search a database using the identifier (e.g., of the application and/or the client device) and/or the capability signature (e.g., a hash value) to obtain full capability information of the client device and/or the application. In some implementations, the tile provider system may transmit, and a database may receive, the identifier (e.g., of the application and/or the client device) and/or the capability signature. The database may transmit, and the tile provider system may receive, search results. In some implementations, the search results may include the full capability information. Alternatively, the search results may include an indication that database does not include capability information associated with the identifier or the capability signature.

In some implementations, if the lookup operation (e.g., described in connection with Fig. 1A and reference number 120) is successful, then the tile provider system may obtain the full capability information from the database (e.g., from memory and/or a capability register that stores the full capability information). For example, in some cases, the tile provider system may obtain the full capability information based on performing the lookup operation.

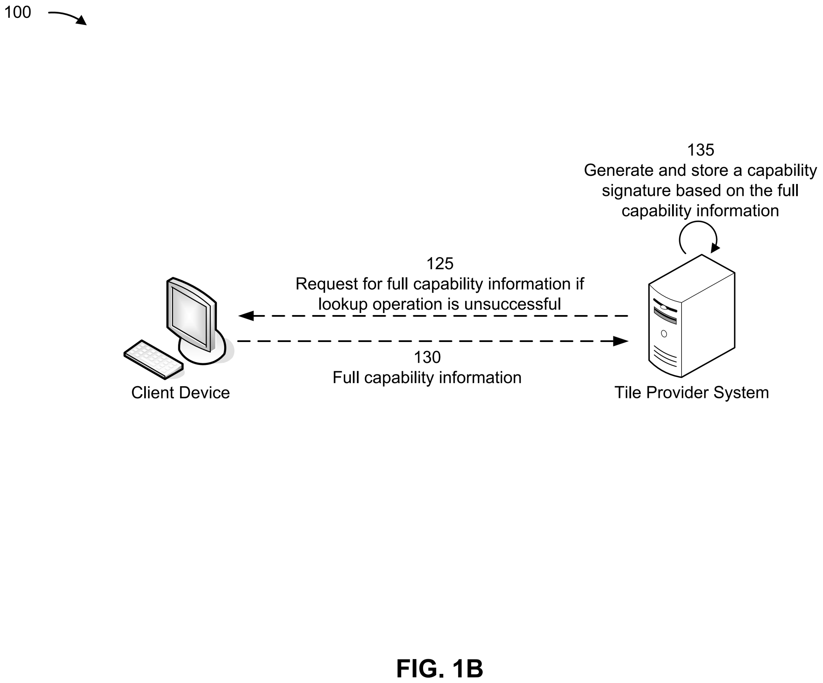

As shown in Fig. 1B, and by reference number 125, the tile provider system may transmit, and the client device may receive, a request for full capability information if the lookup operation is unsuccessful. The lookup operation may be unsuccessful if the tile provider system is unable to obtain the full capability information via the lookup operation (e.g., using the identifier and/or capability signature, as described above). For example, the request for the full capability information may include an error indication. For example, the tile provider system may transmit, and the client device may receive, an error indication based on the client device only including the identifier and/or capability signature in the capability information transmitted as described and depicted in connection with reference number 115. The error indication may be indicative of the tile provider system requesting that the client device provide the full capability information.

As shown by reference number 130, the client device may transmit, and the tile provider system may receive, the full capability information. For example, the client device may transmit, and the tile provider may receive, the full capability information based on the tile provider system transmitting the request as described and depicted in connection with reference number 125. The full capability information may include text and/or code that includes the one or more client capabilities. For example, the full capability information may include a data object or structure that includes the one or more client capabilities, such as a JSON object or a JSON document.

In some implementations, as shown by reference number 135, the tile provider system may generate and/or store a capability signature based on the full capability information. For example, the tile provider system may be configured to generate the capability signature in a similar manner as described in connection with the client device. For example, the tile provider system may be configured to use the same hash function as the client device for generating the capability signature (e.g., a hash value that is based on the full capability information).

The tile provider system may store the capability information (e.g., the full capability information). The tile provider system may store the capability information in association with the identifier (e.g., of the application and/or the client device). In some implementations, the tile provider system may store the capability information in association with the capability signature. For example, the tile provider system may store sets of capability information indexed by respective capability signatures. This enables the tile provider system to search for full capability information when receiving only the identifier or a capability signature from the client device.

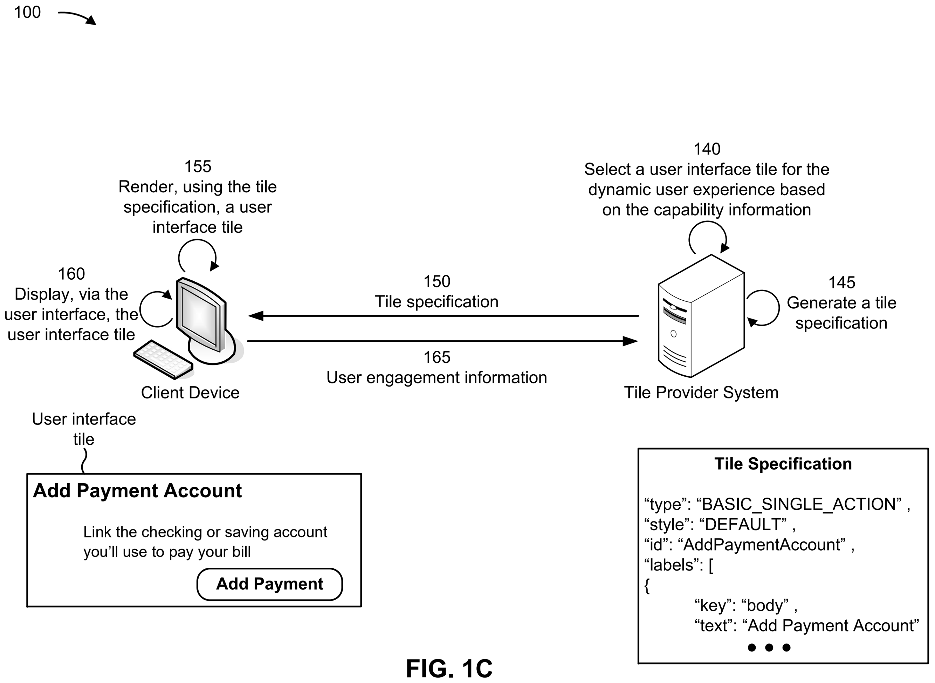

As shown in Fig. 1C, and by reference number 140, the tile provider system may select a user interface tile for the dynamic user experience based on the capability information. In some implementations, selecting the user interface tile may include selecting or determining a tile specification and/or a tile template associated with the user interface tile. The tile provider system may select or determine a user interface tile that includes features, user interface elements, and/or a configuration, among other examples, that is supported by the client device (e.g., as indicated by the capability information). For example, the capability information may indicate one or more supported user interface actions. The tile provider system may select a tile specification and/or a tile template that configures a user interface action that is included in the one or more supported user interface actions. As another example, the capability information may indicate one or more supported user interface elements. The tile provider system may select a tile specification and/or a tile template that configures a user interface element that is included in the one or more supported user interface elements.

In some implementations, the tile provider system may support one or more provider capabilities. The one or more provider capabilities may be similar to the one or more client capabilities. For example, the one or more provider capabilities may indicate capabilities for similar information or actions as described above in connection with the capability information. The tile provider system may compare the one or more provider capabilities to the one or more client capabilities. If the one or more provider capabilities and the one or more client capabilities indicate that the client device (and/or application that provides the user interface) and the tile provider system support the same set of capabilities, then the tile provider system may proceed with generating one or more tile specifications without capability-based modifications or considerations.

If the one or more provider capabilities and the one or more client capabilities indicate that the client device (and/or application that provides the user interface) supports more capabilities than the tile provider system supports (e.g., supports more user interface actions than the tile provider system can support for the dynamic user interface), then the tile provider system may will generate and provide one or more tile specifications based on the one or more provider capabilities. In other words, the tile provider system may generate and provide one or more tile specifications in the manner supported by the tile provider system.

If the one or more provider capabilities and the one or more client capabilities indicate that the tile provider system supports more capabilities than the client device (and/or application that provides the user interface), then the tile provider system may will generate and provide one or more tile specifications based on the one or more client capabilities (e.g., based on the capability information). For example, the tile provider system may generate and provide one or more tile specifications in the manner supported by the client device (and/or application that provides the user interface). This ensures backward compatibility for the user interface tiles as new features are deployed and/or introduced.

If the one or more provider capabilities and the one or more client capabilities indicate that the client device (and/or application that provides the user interface) does not support one or more minimum capabilities for the tile provider system, then the tile provider system may perform one or more actions. For example, the one or more provider capabilities may indicate that the tile provider system only supports certain formats, certain user interface actions, and/or certain user interface elements (e.g., tile elements) for a given dynamic user experience and/or a given user interface tile. If the capability information indicates that the client device (and/or the application) does not support the certain formats, certain user interface actions, and/or certain user interface elements (e.g., tile elements), then the tile provider system may perform one or more actions. In some implementations, the one or more actions may include the tile provider system transmitting, and the client device receiving, an error indication indicating that the tile provider system is unable to provide the dynamic user experience. In some implementations, the error indication may include an indication that the client device does not support minimum capabilities for the dynamic user experience requested.

In some other implementations, the one or more actions may include the tile provider system selecting an alternate component (e.g., an alternate user interface tile, an alternate tile specification, and/or an alternate user interface element) that is supported by the client device (and/or the application). For example, the tile provider system may substitute the component for the dynamic user experience that is not supported by the client device (and/or the application) with a substitute component that is supported by the client device (and/or the application). The substitute component may be associated with the same purpose, goal, or action as the original component that is not supported by the client device (and/or the application). This enables the tile provider system to handle situations where the client device (and/or the application) does not support the minimum capabilities for the dynamic user experience without interruption to the client device and while still providing the dynamic user experience.

In some implementations, the tile provider system may modify the capability information for the client device based on receiving an indication that one or more previously provided tile specifications were not rendered successfully. For example, if the tile provider system provides one or more tile specifications in accordance with the capability information, but the client device is unable to render or interpret the one or more tile specifications, then the tile provider system may determine that the client device is not properly implementing the indicated client capabilities. The tile provider system may modify the capability information for the client device based on determining that the client device is not properly implementing the indicated client capabilities. For example, the tile provider system may modify the capability information to reduce one or more client capabilities to indicate one or more features, user interface actions, and/or user interface elements, among other examples, are not actually supported by the client device if the client device is unable to render or interpret tile specification(s) that include the one or more features, user interface actions, and/or user interface elements, among other examples. This enables the tile provider system to provide tile specifications that can be successfully rendered and/or interpreted by the client device in the event of the client device (and/or the application) experiencing production or implementation issues that result in the client device not supporting one or more indicated client capabilities.

As shown by reference number 145, the tile provider system may generate a tile specification for the user interface tile. A tile specification is depicted and described in more detail in connection with Fig. 2. The tile provider system may generate the tile specification in accordance with the capability information (e.g., the one or more client capabilities) and/or the one or more provider capabilities.

For example, the tile provider system may generate the tile specification such that the tile specification includes information and/or features that are supported by the client device (e.g., that can be interpreted and/or rendered by the client device or the application). Additionally, the tile provider system may generate the tile specification such that the tile specification includes information and/or features that are supported by the tile provider system.

In some implementations, the tile specification may be in accordance with the one or more user permissions indicated by the capability information. For example, the tile specification may indicate information that is permitted by a user as indicated by the one or more user permissions. As another example, the tile specification may indicate one or more features and/or user interface actions that are permitted by a user as indicated by the one or more user permissions.

In some implementations, the dynamic user experience is associated with multiple variants of the dynamic user experience. For example, the multiple variants may be associated with experimentation for a user experience to determine which variant is associated with a highest performance level (e.g., the highest engagement, the best usability, the best accessibility, the best visual design, the best responsiveness, and/or the best ease of navigation). As another example, as new features and/or user interface actions are introduced, a variant including the new features and/or user interface actions may be created. This ensures that the new features and/or user interface actions are not deployed or distributed to the entire population of users. For example, the new features and/or user interface actions may have a risk of introducing unexpected problems or errors. The tile provider system may throttle the rollout of the new features and/or user interface actions using a variant to reduce the likelihood of the problems or errors being experienced by the entire population of users.

The dynamic user experience may be associated with one or more segmentation parameters indicating deployment segmentations for the multiple variants. For example, the deployment segmentations may indicate portions of the population of users that are to be provided with respective variants of the multiple variants (e.g., the one or more segmentation parameters may indicate that 75% of users are to be provided with variant A and 25% of users are to be provided with variant B). In some implementations, the tile provider system may obtain and/or determine the one or more segmentation parameters. In some other implementations, the capability information may indicate the one or more segmentation parameters. In some implementations, the capability information may indicate which variant, of the multiple variants, is to be provided to the client device for the dynamic user experience. In such examples, the tile provider system may generate a tile specification that is configured to cause the client device to render a user interface tile that provides the variant of the dynamic user experience.

The tile specification generated by the tile provider system may indicate a variant, of the multiple variants, in accordance with the one or more segmentation parameters. In some implementations, the tile provider system may determine the variant based on the one or more segmentation parameters. For example, the tile provider system may determine portions of a population of users that have been provided with respective variants. The tile provider system may determine the variant such that the portions of a population of users that have been provided with respective variants follows the deployment segmentations for the multiple variants. The tile provider system may generate a tile specification that is configured to cause the client device to render a user interface tile that provides the variant of the dynamic user experience.

As shown by reference number 150, the tile provider system may transmit, and the client device may receive, the tile specification. The tile specification may indicate user interface information for a user interface tile associated with the dynamic user experience (e.g., requested by the client device as described in connection with Fig. 1A and reference number 110). As described in more detail elsewhere herein, the tile specification may be a data object that indicates user interface information in a channel agnostic manner. The structure and/or content of the tile specification is depicted and described in more detail in connection with Fig. 2.

As shown by reference number 155, the client device may render, using the tile specification, the user interface tile. For example, the client device may render one or more user interface elements associated with the user interface tile based on the tile specification. For example, the client device may interpret and/or decode the tile specification to obtain (e.g., extract) the user interface information. The client device may use a rendering engine (e.g., of the client device and/or application) to process the user interface information and translate the user interface information into visual components (e.g., native components) of a user interface framework for which the client device is configured to use. The client device may render the user interface tile (e.g., using the user interface information obtained from the tile specification) in accordance with the rendering engine, operating system, and/or user interface framework that is used by the client device and/or the application. For example, the client device may obtain information for user interface templates and/or user interface actions (e.g., indicated by the tile specification) from local libraries (e.g., stored by the client device and/or accessible by the client device), as described in more detail elsewhere herein (such as in connection with Fig. 3). This significantly reduces the complexity and increases the flexibility for modifying and/or updating user experiences provided by the user interface because the client device (and/or the application) can use the rendering engine and/or visual components (e.g., native components) of the user interface framework of the client device (and/or the application).

As shown by reference number 160, the client device may display, via the user interface, the user interface tile. For example, the client device may provide the one or more user interface elements of the user interface tile for display via the user interface. In some implementations, the client device may obtain user engagement information associated with the user interface tile. As an example, the user engagement information may indicate how frequently the user interface tile (or one or more user interface elements) is interacted with (such as click rates, hover events, or form submissions), a duration of interaction or user actions taken after interacting with the element, the number of times the user interface tile (or one or more user interface elements) is interacted with, user feedback information (e.g., in a feedback form), repeat interactions with the user interface tile, and/or conversion rates (e.g., a rate of a button press or interaction leading to a result, such as opening a new page), among other examples.

In some implementations, the user interface tile may be associated with a variant of the dynamic user experience, as described elsewhere herein. In such examples, the client device may obtain user engagement information associated with the variant.

In some implementations, as shown by reference number 165, the client device may transmit, and the tile provider system may receive, the user engagement information associated with the user interface tile. The tile provider system may update the tile specification(s) provided by the tile provider system for the dynamic user experience based on the user engagement information. For example, the tile provider system may update a feature, a text label, an image, a title, and/or other user interface information indicated by the tile specification based on the user engagement information. The tile provider system may update the tile specification(s) in an attempt to improve the user engagement information (e.g., to improve interaction rates, click rates, and/or conversion rates, among other user engagement information) for the dynamic user experience.

In some implementations, the tile provider system may update, based on the user engagement information, the one or more segmentation parameters. For example, the user engagement information may indicate a performance level (e.g., high performance, low performance, or another performance level) a given variant. The tile provider system may update the one or more segmentation parameters based on the performance level. For example, if the user engagement information indicates that the variant is performing better than other variants (e.g., if the user engagement information indicates that the variant has higher interaction rates, click rates, and/or conversion rates than other variants), then the tile provider system may update the one or more segmentation parameters to increase the portion of the population of users that is provided with the variant. Alternatively, if the user engagement information indicates that the variant is performing worse than other variants (e.g., if the user engagement information indicates that the variant has lower interaction rates, click rates, and/or conversion rates than other variants), then the tile provider system may update the one or more segmentation parameters to decrease the portion of the population of users that is provided with the variant. This enables the tile provider system to dynamically update the one or more segmentation parameters to improve the performance (e.g., the interaction rates, click rates, and/or conversion rates) for the dynamic user experience.

As indicated above, Figs. 1A-1C are provided as an example. Other examples may differ from what is described with regard to Figs. 1A-1C.

Fig. 2 is a diagram of an example 200 associated with a tile specification 205 for dynamic user interface tiles. As described elsewhere herein, the tile specification 205 may include information (e.g., code and/or instructions) that enables a client device (e.g., the client device described in connection with Figs. 1A-1C and/or elsewhere herein) to render a user interface tile 210 (e.g., shown in Fig. 2 as a hydrated user interface tile). As used herein, a "hydrated" user interface tile refers to a user interface tile with inserted data or information (e.g., as indicated by the tile specification 205).

For example, a user interface tile template 215 may define a template for a type 220 of user interface tile. The user interface tile template 215 may be an un-hydrated user interface tile (e.g., a user interface tile without data or information inserted). For example, the user interface tile template 215 may define a generic template for the type 220 of user interface tile. As shown in Fig. 2, the user interface tile template 215 may indicate a location, position, orientation, and/or size for one or more fields. As shown in Fig. 2, the one or more fields may include a title, a feature icon, a label, and/or a text button, among other examples. The one or more fields may correspond to user interface elements of the user interface tile 210.

The tile specification 205 may be an information set that defines how to render the user interface tile 210 and/or what information is to be included in the user interface tile 210. The tile specification 205 may be a data object that includes one or more key-value pairs and/or an ordered list (or array) of values that indicate the information set. In some implementations, the tile specification 205 may use code, such as JSON code, to indicate the information set. For example, the tile specification 205 may be a JSON object, a JSON payload, and/or a JSON document.

The tile specification 205 may indicate the type 220 of the user interface tile 210. The type 220 may indicate that the user interface tile template 215 is to be used to render the user interface tile 210. For example, the type 220 may enable the client device to identify the user interface tile template 215 that is to be used to render the user interface tile 210. The user interface tile template 215 may define or indicate one or more native components (e.g., the one or more fields) to be used by the client device to render the user interface tile 210. The type 220 of the user interface tile 210 may be a basic single action tile (e.g., a user interface tile configured or designed to enable a user to perform a basic single action, such as navigate to a travel website as shown in Fig. 2). Other types of user interface tiles may be defined or configured (e.g., for performing other actions or displaying other types of content) in a similar manner, such as by using other user interface tile templates.

The tile specification 205 may include one or more labels (e.g., key-value pairs) for indicating information to be included in the user interface tile 210 and/or actions to be provided by the user interface tile 210. The one or more labels may indicate user interface information for the user interface tile 210. The one or more labels may indicate information and/or elements to be inserted into the one or more fields of the user interface tile template 215. For example, the one or more labels may define text and/or image content to be displayed via the user interface tile 210.

As shown in Fig. 2, the one or more labels may include a title 225. The title 225 may indicate information to be inserted into a title field of the user interface tile template 215. For example, a key value may indicate that the information is associated with the title 225 and text value may indicate the text to be inserted into the title field (e.g., "The smart way to plan a trip" as shown in Fig. 2). The one or more labels may include a body 230. The body 230 may indicate information to be inserted into the body of the user interface tile template 215, such as the label field shown in Fig. 2. For example, a key value may indicate that the information is associated with the body 230 and text value may indicate the text to be inserted into the label field shown in Fig. 2.

The one or more labels may include an action label 235. The action label 235 may indicate information (e.g., text) to be used as a label for an interactive user interface element that is configured to enable the user to perform an action. For example, as described above, the type 220 may be associated with a single action. The user interface tile template 215 may include field associated with an interactive user interface element that, when interacted with by a user, causes the client device to perform an action. For example, the field associated with an interactive user interface element is shown in Fig. 2 as the text button field. The action label 235 may indicate a label for the interactive user interface element to be included in the user interface tile 210. For example, a key value may indicate that the information is associated with the action label 235 and text value may indicate the text to be inserted as the label (e.g., "View Travel" as shown in Fig. 2).

The tile specification 205 may indicate one or more actions 240 to be enabled by the user interface 210. For example, the one or more actions 240 may be one or more actions to be performed by the client device based on a user interacting with an interactive user interface element of the user interface tile 210. For example, the one or more actions 240 may indicate what the client device is to do based on (e.g., when or after) detecting that a user has interacted with an interactive user interface element of the user interface tile 210. In some implementations, such as when the type 220 is associated with multiple actions, the one or more actions 240 may indicate which interactive user interface elements respective actions of the multiple actions are to be associated with. As an example, the one or more actions 240 indicated by the tile specification 205 may include navigating to a travel website or page (e.g., the travel website or page may be indicated by the value "openTravelSite" as shown in Fig. 2). The client device may configure the user interface tile 210 such that the client device navigates to the indicated travel website or page based on a user interacting with (e.g., clicking, selecting, or touching) the interactive user element (e.g., shown with the action label 235 of "View Travel" in Fig. 2).

The tile specification 205 may indicate image content to be displayed via the user interface tile 210. For example, the tile specification 205 may indicate an icon 245 to be displayed via the user interface tile 210. The tile specification 205 may indicate a source from which the image content can be obtained or retrieved. For example, as shown in Fig. 2, the tile specification 205 may indicate a URL from which the icon 245 shown in the user interface tile 210 can be obtained or retrieved.

The tile specification 205 shown in Fig. 2 is provided as an example. In other examples, a tile specification may indicate different labels, a different quantity of labels, a different type 220, different action(s) 240, and/or a different quantity of actions 240, among other examples. The tile specification 205 may enable the user interface tile template 215 to be reused for different user experiences. For example, by the tile provider system changing information indicated by the tile specification 205 for the type 220, the user interface tile template 215 can be used by the client device to render user interface tiles for different user experiences. Additionally, the tile provider system can dynamically update a user experience by changing information indicated by the tile specification 205 for the type 220, thereby enabling the client device to render the user interface tile 210 based on the changed information and the user interface tile template 215. This reduces the complexity associated with updating or changing user experiences by tile provider system defining or configuring the user experiences in a channel-agnostic manner using the tile specification 205.

As indicated above, Fig. 2 is provided as an example. Other examples may differ from what is described with regard to Fig. 2.

Fig. 3 is a diagram of an example 300 associated with a tile provider system 305 for dynamic user interface tiles. The tile provider system 305 may communicate the one or more client devices 310 via a communication interface 315. The tile provider system 305 may be, or may be similar to, the tile provider system described in connection with Figs. 1A-1C and 2. similarly, the one or more client devices 310 may be, or may be similar to, the client device described in connection with Figs. 1A-1C and 2.

The one or more communication interfaces 315 may include a wireless connection and/or a wired connection. In some implementations, the one or more communication interfaces 315 may include one or more APIs, a transmission control protocol (TCP) interface, a message queue interface, a remote procedure call interface, a simple mail transfer protocol (SMTP) interface, a simple object access protocol (SOAP) interface, and/or an Internet protocol (IP) interface, among other examples. For example, the tile provider system 305 and the one or more client devices 310 may be configured to communicate one or more tile specifications, and/or capability information, among other examples, via the one or more communication interfaces 315.

The client device(s) 310 may include a rendering component (e.g., an engine) configured to interpret and/or decode tile specifications and render user interface tiles. The engine may include a plugin or module configured for interpreting and/or decoding tile specifications, such as the tile specification 205. The client device(s) 310 may include, or be configured to access, one or more libraries. For example, the one or more libraries may include a tile type library, and/or an action library, among other examples. A tile type library may include user interface tile templates (such as the user interface tile template 215) for respective types (such as the type 220) of user interface tiles. An action library may include information for different types of actions to be performed by the client device(s) 310, such as the one or more actions 240. The one or more libraries may include information that is specific to a channel, a framework (e.g., a coding framework), and/or ecosystem, among other examples in which a given client device 310 is configured to operate. This enables the client device 310 to obtain the information (e.g., that is specific to a channel, a framework (e.g., a coding framework), and/or ecosystem) as part of interpreting and/or decoding tile specifications, thereby enabling the client device to render the user interface tiles (e.g., as defined by the tile specification(s)) in accordance with the channel, a framework (e.g., a coding framework), and/or ecosystem examples in which the given client device 310 is configured to operate.

As shown in Fig. 3, the tile provider system 305 may include one or more components, such as a tile hub component 320, one or more tile provider components 325, one or more tile utility components 330, and/or one or more tile registries 335, among other examples. The tile hub component 320 may be configured to route requests for user experiences to a given tile provider component 325. For example, the tile hub component 320 may be a routing component that is configured to route requests for user experiences based on a type of user experience, and/or a client device 310 that transmitted the request(s), among other examples. For example, one or more tile provider components 325 may include a generic tile provider component and/or one or more service tile provider components. The one or more service tile provider components may be configured to generate tile specifications for respective services or respective user experiences (e.g., a service tile provider may be specific to a given user experience). The generic tile provider component may be configured to generate tile specifications for all other user experiences (e.g., that are not associated with a service tile provider components).

For example, a tile provider component 325 may be configured to obtain data from one or more data sources to be included in a tile specification. The tile provider component 325 may be configured to transmit, to one or more data sources, a request for data associated with a client device 310 (e.g., associated with an account or user that is associated with the client device 310) that transmitted a request for a user experience. The tile provider component 325 may be configured to receive, from the one or more data sources, the data (sometimes referred to herein as "dynamic" data). The tile provider component 325 may be configured to communicate with the one or more tile utility components 330 to generate the tile specification(s).

For example, the one or more tile utility components 330 may include a resolver component and a hydrator component. The resolver component may be configured to identify one or more tile specifications and/or one or more user interface tile templates 215 for an indicated user experience. For example, the tile provider component 325 may transmit, and the resolver component may receive, an indication of the user experience requested by a client device 310. The resolver component may identify (e.g., from the one or more tile registries 335) one or more tile specifications and/or one or more user interface tile templates 215 for the user experience. The one or more tile registries 435 may store tile specifications, configurations, capability information, among other examples, for various user experiences. The resolver component may use the capability information (e.g., the capability information described in connection with Figs. 1A-1C and elsewhere herein) of the client device 310 to identify the one or more tile specifications and/or one or more user interface tile templates 215. This improves the likelihood of the client device 310 receiving a tile specification that enables the client device 310 to successfully render a user interface tile.

The hydrator component may be configured to insert information into one or more tile specifications. For example, the one or more tile specifications and/or one or more user interface tile templates 215 obtained by the resolver component may include one or more placeholder fields to be replaced with data (e.g., the dynamic data for the client device 310) to generate a tile specification that can be used by the client device 310 for rendering one or more user interface tiles. For example, the tile provider component 325 may transmit, and the hydrator component may receive, an indication of the one or more tile specifications and the data that was obtained by the tile provider component 325 (e.g., the dynamic data for the client device 310). The hydrator component may insert the data into the one or more tile specifications to generate one or more tile specifications that are ready for rendering by the client device 310. The hydrator component may transmit, and the tile provider component 325 may receive, the one or more tile specifications (e.g., hydrated tile specification(s)). The tile provider component 325 may cause the one or more tile specifications to be transmitted to the client device 310 (e.g., via the tile hub component 320). For example, the tile provider system 305 may transmit, and the client device 310 may receive, the one or more tile specifications (e.g., hydrated tile specification(s)) via the communication interface 315.

The client device 310 may render one or more user interface tiles based on the one or more tile specifications and the libraries described above. For example, the engine of the client device may be configured to render the one or more user interface tiles based on the one or more tile specifications and the libraries. The client device 310 may display the one or more user interface tiles via a user interface (e.g., a GUI).

As indicated above, Fig. 3 is provided as an example. Other examples may differ from what is described with regard to Fig. 3.

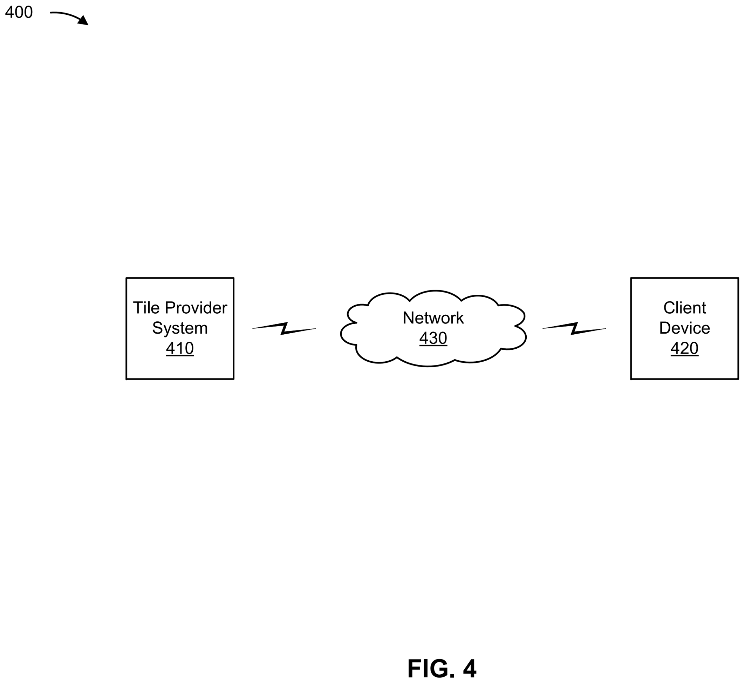

Fig. 4 is a diagram of an example environment 400 in which systems and/or methods described herein may be implemented. As shown in Fig. 4, environment 400 may include a tile provider system 410 (e.g., the tile provider system 305), a client device 420 (e.g., the client device 310), and a network 430. Devices of environment 400 may interconnect via wired connections, wireless connections, or a combination of wired and wireless connections.

The tile provider system 410 may include one or more devices capable of receiving, generating, storing, processing, providing, and/or routing information associated with a capability negotiation for dynamic user interface tiles, as described elsewhere herein. The tile provider system 410 may include a communication device and/or a computing device. For example, the tile provider system 410 may include a server, such as an application server, a client server, a web server, a database server, a host server, a proxy server, a virtual server (e.g., executing on computing hardware), or a server in a cloud computing system. In some implementations, the tile provider system 410 may include computing hardware used in a cloud computing environment.

The client device 420 may include one or more devices capable of receiving, generating, storing, processing, and/or providing information associated with a capability negotiation for dynamic user interface tiles, as described elsewhere herein. The client device 420 may include a communication device and/or a computing device. For example, the client device 420 may include a wireless communication device, a mobile phone, a user equipment, a laptop computer, a tablet computer, a desktop computer, a wearable communication device (e.g., a smart wristwatch, a pair of smart eyeglasses, a head mounted display, or a virtual reality headset), or a similar type of device.

The network 430 may include one or more wired and/or wireless networks. For example, the network 430 may include a wireless wide area network (e.g., a cellular network or a public land mobile network), a local area network (e.g., a wired local area network or a wireless local area network (WLAN), such as a Wi-Fi network), a personal area network (e.g., a Bluetooth network), a near-field communication network, a telephone network, a private network, the Internet, and/or a combination of these or other types of networks. The network 430 enables communication among the devices of environment 400.

The number and arrangement of devices and networks shown in Fig. 4 are provided as an example. In practice, there may be additional devices and/or networks, fewer devices and/or networks, different devices and/or networks, or differently arranged devices and/or networks than those shown in Fig. 4. Furthermore, two or more devices shown in Fig. 4 may be implemented within a single device, or a single device shown in Fig. 4 may be implemented as multiple, distributed devices. Additionally, or alternatively, a set of devices (e.g., one or more devices) of environment 400 may perform one or more functions described as being performed by another set of devices of environment 400.

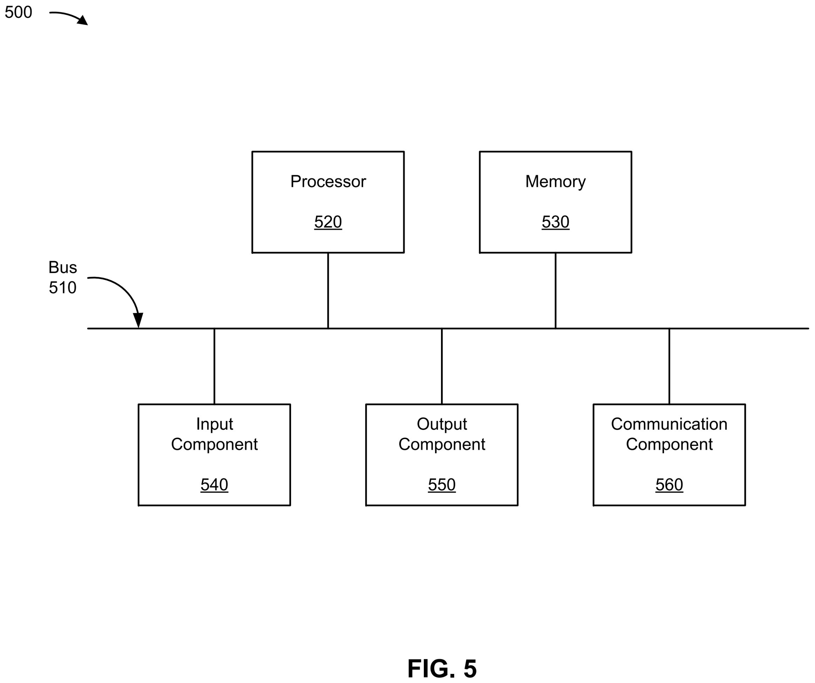

Fig. 5 is a diagram of example components of a device 500 associated with a capability negotiation for dynamic user interface tiles. The device 500 may correspond to the tile provider system 305 (and/or one or more components of the tile provider system 305), the tile provider system 410, the client device 310, and/or the client device 420. In some implementations, tile provider system 305 (and/or one or more components of the tile provider system 305), the tile provider system 410, the client device 310, and/or the client device 420 may include one or more devices 500 and/or one or more components of the device 500. As shown in Fig. 5, the device 500 may include a bus 510, a processor 520, a memory 530, an input component 540, an output component 550, and/or a communication component 560.

The bus 510 may include one or more components that enable wired and/or wireless communication among the components of the device 500. The bus 510 may couple together two or more components of Fig. 5, such as via operative coupling, communicative coupling, electronic coupling, and/or electric coupling. For example, the bus 510 may include an electrical connection (e.g., a wire, a trace, and/or a lead) and/or a wireless bus. The processor 520 may include a central processing unit, a graphics processing unit, a microprocessor, a controller, a microcontroller, a digital signal processor, a field-programmable gate array, an application-specific integrated circuit, and/or another type of processing component. The processor 520 may be implemented in hardware, firmware, or a combination of hardware and software. In some implementations, the processor 520 may include one or more processors capable of being programmed to perform one or more operations or processes described elsewhere herein.

The memory 530 may include volatile and/or nonvolatile memory. For example, the memory 530 may include random access memory (RAM), read only memory (ROM), a hard disk drive, and/or another type of memory (e.g., a flash memory, a magnetic memory, and/or an optical memory). The memory 530 may include internal memory (e.g., RAM, ROM, or a hard disk drive) and/or removable memory (e.g., removable via a universal serial bus connection). The memory 530 may be a non-transitory computer-readable medium. The memory 530 may store information, one or more instructions, and/or software (e.g., one or more software applications) related to the operation of the device 500. In some implementations, the memory 530 may include one or more memories that are coupled (e.g., communicatively coupled) to one or more processors (e.g., processor 520), such as via the bus 510. Communicative coupling between a processor 520 and a memory 530 may enable the processor 520 to read and/or process information stored in the memory 530 and/or to store information in the memory 530.

The input component 540 may enable the device 500 to receive input, such as user input and/or sensed input. For example, the input component 540 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 550 may enable the device 500 to provide output, such as via a display, a speaker, and/or a light-emitting diode. The communication component 560 may enable the device 500 to communicate with other devices via a wired connection and/or a wireless connection. For example, the communication component 560 may include a receiver, a transmitter, a transceiver, a modem, a network interface card, and/or an antenna.

The device 500 may perform one or more operations or processes described herein. For example, a non-transitory computer-readable medium (e.g., memory 530) may store a set of instructions (e.g., one or more instructions or code) for execution by the processor 520. The processor 520 may execute the set of instructions to perform one or more operations or processes described herein. In some implementations, execution of the set of instructions, by one or more processors 520, causes the one or more processors 520 and/or the device 500 to perform one or more operations or processes described herein. In some implementations, hardwired circuitry may be used instead of or in combination with the instructions to perform one or more operations or processes described herein. Additionally, or alternatively, the processor 520 may be configured to perform one or more operations or processes described herein. Thus, implementations described herein are not limited to any specific combination of hardware circuitry and software.

The number and arrangement of components shown in Fig. 5 are provided as an example. The device 500 may include additional components, fewer components, different components, or differently arranged components than those shown in Fig. 5. Additionally, or alternatively, a set of components (e.g., one or more components) of the device 500 may perform one or more functions described as being performed by another set of components of the device 500.

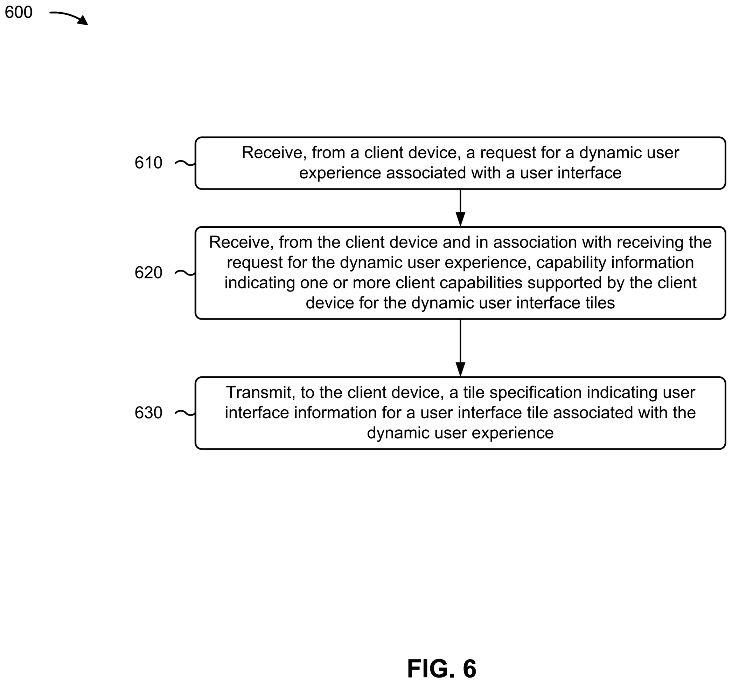

Fig. 6 is a flowchart of an example process 600 associated with a capability negotiation for dynamic user interface tiles. In some implementations, one or more process blocks of Fig. 6 may be performed by a tile provider system (e.g., the tile provider system 305 and/or the tile provider system 410). In some implementations, one or more process blocks of Fig. 6 may be performed by another device or a group of devices separate from or including the tile provider system, such as the client device(s) 310, the client device 420, the tile hub component 320, a tile provider component 325, a tile utility component 330, and/or a tile registry 335. Additionally, or alternatively, one or more process blocks of Fig. 6 may be performed by one or more components of the device 500, such as processor 520, memory 530, input component 540, output component 550, and/or communication component 560.

As shown in Fig. 6, process 600 may include receiving, from a client device, a request for a dynamic user experience associated with a user interface (block 610). For example, the tile provider system 410 (e.g., using processor 520, memory 530, input component 540, and/or communication component 560) may receive, from a client device, a request for a dynamic user experience associated with a user interface, as described above in connection with reference number 110 of Fig. 1A. As an example, a user may interact with the user interface to cause the client device to request the dynamic user experience.

As further shown in Fig. 6, process 600 may include receiving, from the client device and in association with receiving the request for the dynamic user experience, capability information indicating one or more client capabilities supported by the client device for the dynamic user interface tiles (block 620). For example, the tile provider system 410 (e.g., using processor 520, memory 530, input component 540, and/or communication component 560) may receive, from the client device and in association with receiving the request for the dynamic user experience, capability information indicating one or more client capabilities supported by the client device for the dynamic user interface tiles, as described above in connection with reference number 115 of Fig. 1A. As an example, the one or more client capabilities may indicate features, formats, information, and/or user interface elements, among other examples, supported by the client device.

As further shown in Fig. 6, process 600 may include transmitting, to the client device, a tile specification indicating user interface information for a user interface tile associated with the dynamic user experience (block 630). For example, the tile provider system 410 (e.g., using processor 520, memory 530, and/or communication component 560) may transmit, to the client device, a tile specification indicating user interface information for a user interface tile associated with the dynamic user experience, as described above in connection with reference number 150 of Fig. 1C. In some implementations, the tile specification is in accordance with the capability information and one or more provider capabilities.

Although Fig. 6 shows example blocks of process 600, in some implementations, process 600 may include additional blocks, fewer blocks, different blocks, or differently arranged blocks than those depicted in Fig. 6. Additionally, or alternatively, two or more of the blocks of process 600 may be performed in parallel. The process 600 is an example of one process that may be performed by one or more devices described herein. These one or more devices may perform one or more other processes based on operations described herein, such as the operations described in connection with Figs. 1A-1C. Moreover, while the process 600 has been described in relation to the devices and components of the preceding figures, the process 600 can be performed using alternative, additional, or fewer devices and/or components. Thus, the process 600 is not limited to being performed with the example devices, components, hardware, and software explicitly enumerated in the preceding figures.

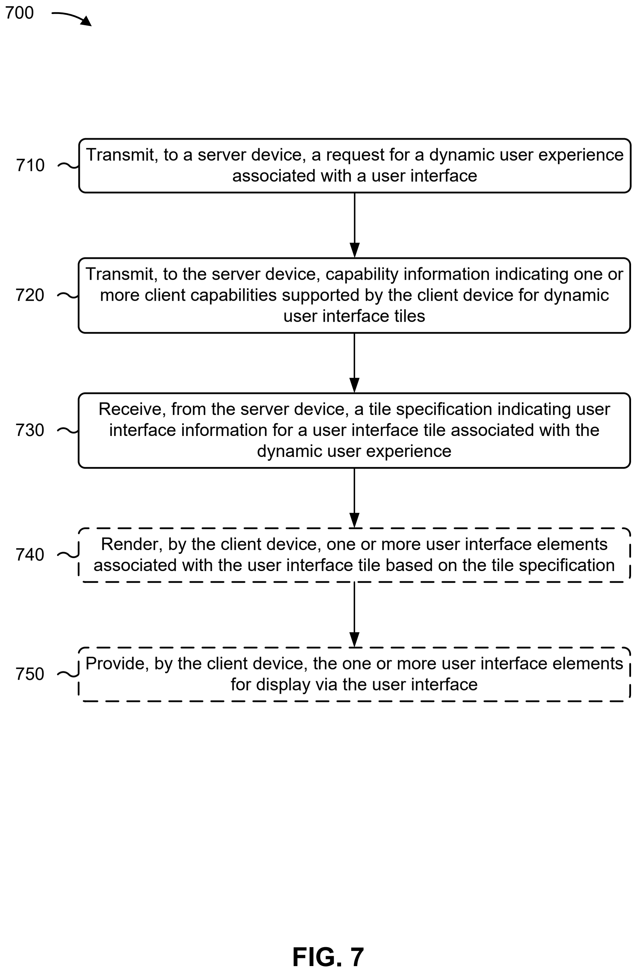

Fig. 7 is a flowchart of an example process 700 associated with a capability negotiation for dynamic user interface tiles. In some implementations, one or more process blocks of Fig. 7 may be performed by a (e.g., a client device 310 and/or the client device 420). In some implementations, one or more process blocks of Fig. 7 may be performed by another device or a group of devices separate from or including the client device 420, such as the tile provider system 305, the tile provider system 410, the tile hub component 320, a tile provider component 325, a tile utility component 330, and/or a tile registry 335. Additionally, or alternatively, one or more process blocks of Fig. 7 may be performed by one or more components of the device 500, such as processor 520, memory 530, input component 540, output component 550, and/or communication component 560.

As shown in Fig. 7, process 700 may include transmitting, to a server device, a request for a dynamic user experience associated with a user interface (block 710). For example, the client device 420 (e.g., using processor 520, memory 530, and/or communication component 560) may transmit, to a server device, a request for a dynamic user experience associated with a user interface, as described above in connection with reference number 110 of Fig. 1A. As an example, a user may interact with the user interface to cause the client device to request the dynamic user experience.

As further shown in Fig. 7, process 700 may include transmitting, to the server device, capability information indicating one or more client capabilities supported by the client device for dynamic user interface tiles (block 720). For example, the client device 420 (e.g., using processor 520, memory 530, and/or communication component 560) may transmit, to the server device, capability information indicating one or more client capabilities supported by the client device for dynamic user interface tiles, as described above in connection with reference number 115 of Fig. 1A. As an example, the one or more client capabilities may indicate features, formats, information, and/or user interface elements, among other examples, supported by the client device.

As further shown in Fig. 7, process 700 may include receiving, from the server device, a tile specification indicating user interface information for a user interface tile associated with the dynamic user experience (block 730). For example, the client device 420 (e.g., using processor 520, memory 530, input component 540, and/or communication component 560) may receive, from the server device, a tile specification indicating user interface information for a user interface tile associated with the dynamic user experience, as described above in connection with reference number 150 of Fig. 1C. In some implementations, the tile specification is in accordance with the capability information and one or more provider capabilities of the server device.

As further shown in Fig. 7, process 700 may optionally include rendering one or more user interface elements associated with the user interface tile based on the tile specification (block 740). For example, the client device 420 (e.g., using processor 520 and/or memory 530) may render one or more user interface elements associated with the user interface tile based on the tile specification, as described above in connection with reference number 155 of Fig. 1C. As an example, the client device may render the user interface tile using a user interface framework and/or engine of the client device. The client device may obtain user interface information from the tile specification. The client device may provide the user interface information to the user interface framework and/or engine to enable the client device to render the user interface tile using native user interface components and/or frameworks.

As further shown in Fig. 7, process 700 may optionally include providing the one or more user interface elements for display via the user interface (block 750). For example, the client device 420 (e.g., using processor 520, output component 550, and/or memory 530) may provide the one or more user interface elements for display via the user interface, as described above in connection with reference number 160 of Fig. 1C.

Although Fig. 7 shows example blocks of process 700, in some implementations, process 700 may include additional blocks, fewer blocks, different blocks, or differently arranged blocks than those depicted in Fig. 7. Additionally, or alternatively, two or more of the blocks of process 700 may be performed in parallel. The process 700 is an example of one process that may be performed by one or more devices described herein. These one or more devices may perform one or more other processes based on operations described herein, such as the operations described in connection with Figs. 1A-1C. Moreover, while the process 700 has been described in relation to the devices and components of the preceding figures, the process 700 can be performed using alternative, additional, or fewer devices and/or components. Thus, the process 700 is not limited to being performed with the example devices, components, hardware, and software explicitly enumerated in the preceding figures.

The foregoing disclosure provides illustration and description, but is not intended to be exhaustive or to limit the implementations to the precise forms disclosed. Modifications may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The hardware and/or software code described herein for implementing aspects of the disclosure should not be construed as limiting the scope of the disclosure. Thus, the operation and behavior of the systems and/or methods are described herein without reference to specific software code - it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination and permutation of those items, including single members. As an example, "at least one of: a, b, or c" is intended to cover a, b, c, a-b, a-c, b-c, and a-b-c, as well as any combination with multiple of the same item. As used herein, the term "and/or" used to connect items in a list refers to any combination and any permutation of those items, including single members (e.g., an individual item in the list). As an example, "a, b, and/or c" is intended to cover a, b, c, a-b, a-c, b-c, and a-b-c.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors configured to: perform X; perform Y; and perform Z," that claim should be interpreted to mean "one or more processors configured to perform X; one or more (possibly different) processors configured to perform Y; and one or more (also possibly different) processors configured to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A method for a capability negotiation for dynamic user interface tiles, the method comprising:
receiving, from a client device, a request for a dynamic user experience associated with a user interface;
receiving, from the client device and in association with receiving the request for the dynamic user experience, capability information indicating one or more client capabilities supported by the client device for the dynamic user interface tiles; and
transmitting, to the client device, a tile specification indicating user interface information for a user interface tile associated with the dynamic user experience,
wherein the tile specification is in accordance with the capability information and one or more provider capabilities.

2. The method of claim 1, further comprising:
generating, based on receiving the request for the dynamic user experience, the tile specification in accordance with the one or more client capabilities and the one or more provider capabilities.

3. The method of claim 1 or 2, wherein the method further comprises:
generating a hash value based on the one or more client capabilities; and
storing the one or more client capabilities in association with the hash value.

4. The method of any one of the preceding claims, wherein receiving the capability information comprises:
receiving, from the client device, a hash value that is based on the one or more client capabilities;
determining that the one or more client capabilities are not accessible using the hash value;
transmitting, to the client device, an indication that the one or more client capabilities are not accessible using the hash value; and
receiving, from the client device, a capability document that includes the one or more client capabilities based on transmitting the indication that the one or more client capabilities are not accessible using the hash value.

5. A method for a capability negotiation for dynamic user interface tiles, comprising:
transmitting, by a client device and to a server device, a request for a dynamic user experience associated with a user interface;
transmitting, by the client device and to the server device, capability information indicating one or more client capabilities supported by the client device for dynamic user interface tiles;
receiving, by the client device and from the server device, a tile specification indicating user interface information for a user interface tile associated with the dynamic user experience,
wherein the tile specification is in accordance with the capability information and one or more provider capabilities of the server device;
rendering, by the client device, one or more user interface elements associated with the user interface tile based on the tile specification; and
providing, by the client device, the one or more user interface elements for display via the user interface.

6. The method of claim 5, further comprising:
detecting, based on a user interaction associated with the user interface, that the dynamic user experience is to be provided via the user interface,
wherein transmitting the request for the dynamic user experience is based on detecting that the dynamic user experience is to be provided via the user interface.

7. The method of claim 5 or 6, wherein transmitting the capability information comprises:
transmitting, to the server device, a hash value that is based on the one or more client capabilities;
receiving, from the server device, an indication that the one or more client capabilities are not accessible by the server device using the hash value; and
transmitting, to the server device, a capability document that includes the one or more client capabilities based on receiving the indication that the one or more client capabilities are not accessible by the server device using the hash value.

8. The method of any one of claims 5 to 7, further comprising:
obtaining one or more user permissions granted for the user interface,
wherein the capability information indicates the one or more user permissions, and
wherein the tile specification is in accordance with the one or more user permissions.

9. The method of any one of the preceding claims, wherein the one or more client capabilities include at least one of:
an identifier of an application that is configured to display the user interface via the client device,
a version of the application,
a channel associated with the application,
one or more user interface actions supported by the application,
one or more supported tile elements associated with the tile specification, or
one or more supported tile types.

10. The method of any one of the preceding claims, wherein the capability information includes a hash value that is based on the one or more client capabilities.

11. The method of any one of the preceding claims, wherein the dynamic user experience is associated with multiple variants of the dynamic user experience,
wherein the dynamic user experience is associated with one or more segmentation parameters indicating deployment segmentations for the multiple variants, and
wherein the tile specification indicates a variant, of the multiple variants, in accordance with the one or more segmentation parameters;
wherein, optionally, the capability information indicates the one or more segmentation parameters

12. The method of claim 11, when dependent on any one of claims 1 to 4, further comprising:
obtaining user engagement information associated with the variant; and
updating, based on the user engagement information, the one or more segmentation parameters.

13. The method of any one of the preceding claims, wherein the capability information indicates one or more user permissions granted for the client device, and
wherein the tile specification is in accordance with the one or more user permissions.

14. A computer program that, when executed by one or more processors, causes the one or more processors to carry out the method of any one of the preceding claims.

15. A system comprising one or more processors configured to carry out the method of any one of claims 1 to 14.
